(19) Europäisches Patentamt
European Patent Office
Office européen des brevets

(11) EP 2 161 144 A2

(12) EUROPEAN PATENT APPLICATION

(43) Date of publication:
10.03.2010 Bulletin 2010/10

(51) Int Cl.:
B60C 23/06 (2006.01)

(21) Application number: 09010853.1

(22) Date of filing: 25.08.2009

(84) Designated Contracting States:
AT BE BG CH CY CZ DE DK EE ES FI FR GB GR HR HU IE IS IT LI LT LU LV MC MK MT NL NO PL PT RO SE SI SK SM TR
Designated Extension States:
AL BA RS

(30) Priority: 02.09.2008 US 202452

(71) Applicant: National University of Ireland, Maynooth
Maynooth, County Kildare (IE)

(72) Inventors:
• Shorten, Robert
Rathfarnham
Dublin 16 (IE)
• Solmaz, Selim
Maynooth
Co. Kildare (IE)

(74) Representative: Boyce, Conor et al
FRKelly
27 Clyde Road
Ballsbridge
Dublin 4 (IE)

(54) **A method of determining the tire conditions of a vehicle**

(57) A method of determining the tire conditions of a vehicle comprises constructing a plurality of models of vehicle behaviour, each model being associated with one or more tires having varying cornering stiffness; measuring vehicle behaviour during a cornering manoeuvre of the vehicle; comparing measured vehicle behaviour with behaviour predicted by said models; and determining which of said models most effectively predicts the behaviour of the vehicle.

Fig. 14

## Description

This invention relates to a method for determining the tire conditions of a vehicle. Embodiments of the invention include determining height, horizontal location and lateral position of the centre of gravity. Embodiments of the invention have particular, but not exclusive, application for use with passive and active rollover detection and prevention systems.

Vehicle tires provide the sole contact medium between an automotive vehicle and the road surface. It is important that there is sufficient and balanced tire contact and traction across all the wheels for a safe and stable operation of the vehicle. One aspect of tire health is related to the tire thread depth. In the event that an individual or a plurality of tires are subject to excessive thread wear, the resulting road holding (i.e., lateral traction) in the corresponding wheels will reduce and the vehicle will have a compromised handling, which can result in accidents.

Another aspect of good tire functioning is related to the tire pressure levels. It is required that all tires of the vehicle contain certain recommended amount of pressurized air to support the weight of the vehicle as well as to provide the sufficient longitudinal/lateral traction for optimum road holding. Over and under inflated tires will, in general, have reduced or non-optimal tire contact geometry, which will compromise the lateral traction as well as the overall vehicle safety. Moreover, significant variations in the tire wear and pressure levels among the four wheels may result in a steering pull during straight driving, possibly annoying the driver.

In extreme driving situations (high speed and/or high lateral acceleration), a rapid pressure drop in a single or plurality of tires may result in the failure of the corresponding wheels and consequently cause accidents due to loss of traction and stability. In the United States all light vehicles (weight < 4536kg) produced after September 2007 are required by law (TREAD Act) to include a tire pressure monitoring system, which as a minimum functionality, needs to inform the driver when a pressure drop in excess of 25% (of the recommended pressure level) occurs in any of the wheels. It is reasonable to assume that similar legislations will be adopted in the EU and Japan, as well as the rest of the world in the near future. Based on these considerations, there is a need for technologies that enable rapid and accurate monitoring of tire pressure levels and thread wear conditions, which can provide significant benefits for the overall passenger and vehicle safety.

The importance of tire condition on ride quality and safety is well known. There are three different approaches in the literature that are suggested to measure, infer or control optimal tire operating conditions. A first approach is "run-flat" tire technology which aims to provide a safe road going capability in the event of a reduced or a lack of air pressure. Such tires utilize alternative materials, mechanisms and/or designs to provide sufficient self-support for carrying the vehicle weight in the event of pressure loss/absence in the tires. Although such technologies are quite exciting, their current price levels and relative complexity as well as questions regarding their reliability will prevent them from being the standard mainstream tires of choice in the foreseeable future. Given this fact, and also the existing legislative requirements in some countries (such as TREAD Act in US) it is safe to assume that technologies that monitor tire pressure/wear in standard inflated tires are required.

A second set of prior art includes "Direct" tire pressure monitoring systems, which involve a sensing element that is embedded inside the tire to measure the current tire pressure levels.

For example, US patent 6,300,867 discloses a spring loaded contact switch embedded into each wheel and in the event of a low tire pressure the switch closes a circuit to issue a warning signal to the driver. In US patent 7,024,318 the use of wireless pressure sensors in each wheel to directly measure air pressures is detailed. In US patent 7,227,458 the use of a pressure sensor along with an acceleration sensor embedded to each wheel is considered, which aim to improve the pressure sensing data. In US patents 6,278,361 and US 6,759,952 the use of radial and lateral acceleration signals along with temperature and pressure sensors on each wheel is considered, where they suggest analyzing wheel vibration and pressure data to estimate tire imbalance, tire thread wear or suspension performance. In US patent 7,180,490 the use of RFID tags embedded into the tire threads along with RFID scanners outside each tire is considered to monitor thread thickness. While all of these can potentially provide invaluable information about tire conditions, there are issues related to the cost, reliability and the maintenance requirements of the sensors used in these systems. Some of these systems are already available in the market at premium prices for the consumer. Considering the approach of the automotive industry with regards to using additional sensors and technologies at an additional cost, it can be assumed that such direct measurement systems will not be available as standard in all vehicles in the near future.

On the other hand, a third set of prior art includes "indirect" tire pressure monitoring systems that involve utilizing available sensory equipment from other subsystems of the car. These systems mainly make use of the ABS (Anti Blocking System) and ESP (Electronic Stability Program) sensors. An example of such a system is disclosed in US patent 6,684,691 where wheel rotation speed information from ABS system is used to compute the imbalance on tire pressures attached to each axle. This is achieved by calculating the distance travelled by each wheel during straight and steady speed driving conditions. US patent application no. 2007/0061100 discloses using wheel rotation analysis along with wheel vibration analysis based on the wheel speed sensors (as part of ABS) in each wheel. Wheel rotation analysis is used to estimate the running radius (and the distance travelled) for each wheel. Wheel vibration analysis is utilized to monitor time dependent variation of the rotation velocity, where the vibration frequency is heavily dependent on the pressure levels. While these methods are very useful, they are prone to errors due to sensor inaccuracies and are heavily affected from loading changes, cornering, and high speed operation. They are also known to utilize significant computational power.

It is an object of the present invention to address these limitations of the prior art.

Accordingly, the invention provides a method according to claim 1.

The invention is based upon the observation that the lateral handling behaviour of any vehicle will depend on the available traction in each of the wheels, measured in terms of the tire cornering stiffness. Given certain sensory information, this observation can be used to estimate any condition that can result in a reduced cornering stiffness (i.e. reduced traction) in a moving vehicle as follows. First, *a-priori*, a range of vehicle models are constructed that reflect hypothetical vehicle behaviour given the different conditions in a single or a plurality of tires, where every model is driven with the same vehicle sensor measurements of steering angle and vehicle speed. Then, by comparing the predicted outputs of these models (predicted lateral acceleration, and yaw rate) with the actual sensor readings by means of a non-linear cost function, it is possible to infer the model that most accurately reflects the vehicle dynamics corresponding to the type of the tire condition in the vehicle. The inferred model is the one constructed from the assumed tire condition that has "closest" dynamics to that of the measured vehicle response. The step of comparing measured vehicle behaviour with the behaviour predicted by the models may include calculating for each model an error value that quantifies the inaccuracy of the model. In such cases, determining which of the models most effectively predicts behaviour of the vehicle may include selecting the least error value minimizing a nonlinear cost function.

Once the best model (in the sense of smallest output error) has been identified, the corresponding tire cornering stiffness distribution (or non-existence of it), as predicted by the selected model, is assumed to be correct. The constructed models may include unknown parameters that define varying levels of tire stiffness values. Alternatively or additionally, the models may be parameterised with varying levels of vehicle mass.

The invention does not require the use of any additional sensors where lateral stability control (e.g., ESP) sensors are available. Thus the invention can be implemented with no additional hardware cost. When providing pressure and thread wear monitoring functionality, the invention is not dependent on the vehicle wheel rotational speed. Also, in contrast to other indirect tire pressure monitoring systems, the invention operates during cornering manoeuvres, whereas alternative indirect tire pressure estimation systems can only provide reliable information during steady state straight driving conditions and are typically ineffective at high speeds.

While the accuracy provided by implementations of the present invention may not match the accuracy of direct tire pressure monitoring/measurement systems, the financial overhead and the need for regular maintenance of direct monitoring/measurement systems inhibits their adoption by the industry in place of indirect monitoring systems such as the present invention. Nonetheless, the present invention can also be used as a backup to a direct tire pressure measurement/monitoring system, particularly when there is a problem in the tire sensors of the direct measurement/monitoring system.

Particular embodiments of the invention can be implemented such that vehicle load or speed variations do not affect the tire pressure/wear monitoring functionality.

In methods embodying the invention, measured vehicle behaviour is typically determined from data received from sensors deployed upon the vehicle. These may include one or more of steering angle, lateral acceleration, vehicle speed, and yaw rate. While it is not required for the basic functioning of the estimation method, the sensor information may also include roll angle and roll rate, or alternatively, pitch angle and pitch rate.

The invention enables tire conditions to be identified rapidly in real time, whenever the vehicle makes a cornering manoeuvre, where the alternative indirect tire pressure estimation systems are known to be ineffective. Also, the embodiments do not require a vast amount of output measurement history before the identification can be made, which is a common feature of other online estimation methods to deal with the persistence-of-excitation concept in system identification.

The present invention can be implemented in conventional vehicle ECU (electronic control units) to detect, for example, over/under inflation of an individual or a plurality of tires, sudden/slow pressure drops and excessive tire thread wear, especially, in vehicles equipped with lateral stability control systems. The specific sensor information required includes vehicle speed, lateral acceleration, steering angle and yaw rate signals, all of which are available as part of the standard vehicle lateral stability systems such as ESP (Electronic Stability Program), ESC (Electronic Stability Control), DSC (Dynamic Stability Control), VSC (Vehicle Stability Control), AdvanceTrac, Stabilitrac etc.

The information provided by the present invention can be used to issue an audio-visual signal to warn/inform the driver of the tire/tires or the axle subject to the pressure/wear defect.

Additionally or alternatively, the information can be used to issue a signal to reduce engine torque automatically in a safe and controlled manner to pre-specified levels for limiting the vehicle speed. This automatic torque reduction serves the purpose of:

- indirectly warning the driver about a fault/failure in the vehicle; and/or

- reducing the chances of an accident due to a tire failure, which can be induced by large wheel forces occurring at high vehicle speeds.

Alternative implementations of the invention can be used to recognize different predetermined types of wheels or tires (e.g., snow tires, tires with snow chains, space saver tires, etc.), each type having an associated model so that the vehicle can dynamically detect the type of wheels/tires attached to the vehicle. The vehicle can then issue an audio-visual signal to inform the driver of the type of wheels or tires used. Additionally or alternatively, it can be used to limit engine speed to levels that are optimal/safe for the given tire type and operating conditions.

Embodiments of the invention will now be described in detail, by way of example, and with reference to the accompanying drawings, in which:

Figure 1 is a schematic diagram of a vehicle with a geometry for calculating the horizontal CG position;

Figure 2 is a schematic description of a vehicle with a geometry for calculating CG height based on roll dynamics;

Figure 3 shows a flow chart describing a method for calculating the horizontal CG position;

Figure 4 shows a flow chart describing a method for calculating CG height based on roll dynamics;

Figure 5 is a schematic description of a vehicle with geometry for calculating CG height based on pitch dynamics;

Figure 6 shows a flow chart describing a method for calculating CG height based on pitch dynamics, and

Figure 7 is schematic description of a vehicle with geometry for calculating lateral CG position.

Figure 8 shows a flow chart describing a method, being an embodiment of the invention, for calculating the tire cornering stiffness parameters.

Figure 9 shows a flow chart describing a method, being a second embodiment of the invention, for recognizing possible defects compromising lateral traction in automotive tires.

Figure 10 is a schematic diagram of a vehicle model with a specific geometry for calculating the lateral tire forces and unknown tire cornering stiffness values.

Figure 11 illustrates various tire failure modes to be detected using the embodiments of the invention.

Figure 12 illustrates the nonlinear lateral tire force variation as a function of changing vertical loads and changing sideslip angles for two different tire setups.

Figure 13 is a schematic diagram for calculating a vehicle's asymmetric steering geometry.

Figure 14 depicts the multiple model estimation structure.

Figure 15 illustrates tire failure modes to be detected using a third embodiment of the invention.

In the description that follows, the notation set forth below will be adopted:

$m$  Vehicle mass.

$g$  Gravitational acceleration constant.

$C_v$, $C_h$  Front and rear linear tire stiffness parameters respectively.

$l_v$, $l_h$  Longitudinal position of CG measured from front and rear axles respectively.

$L$  Axle separation ($L = l_v + l_h$).

$T$  Track width (separation between right and left wheels).

| | |
|---|---|
| $h$ | CG height measured from ground. |
| $y$ | CG lateral position measured from the vehicle centerline. |
| $k, c$ | Linear spring stiffness and linear viscous friction coefficients respectively representing the components of the vehicle suspension system in the roll plane. |
| $b, d$ | Linear spring stiffness and linear viscous friction coefficients respectively representing the components of the vehicle suspension system in the pitch plane. |
| $J_{xx}, J_{yy}, J_{zz}$ | Moment of inertia of the empty vehicle measured at the CG about the roll, pitch and yaw axes respectively. |
| $v_x, v_y$ | Longitudinal and lateral velocities measured at the vehicle CG respectively. |
| $\beta$ | Sideslip angle at the vehicle CG. |
| $\dot{\psi}$ | Yaw rate. |
| $\phi, \dot{\phi}$ | Vehicle roll angle and roll rate, respectively. |
| $\theta, \dot{\theta}$ | Vehicle pitch angle and pitch rate, respectively. |
| $\delta$ | Steering angle. |
| $a_y, a_x$ | Lateral and longitudinal accelerations in inertial coordinates, respectively. |

Among the vehicle parameters listed above, the axle separation ($L$), the track width ($T$), the moments of inertia ($J_{xx}, J_{yy}, J_{zz}$) can be directly measured by the vehicle manufacturer. For simplicity of the in the context of this specification, the vehicle mass $m$ is also assumed to be known, although the embodiment described here can be extended to deal with unknown mass.

Standard sensor packs, routinely fitted to vehicles, are used to measure the lateral acceleration $a_y$, the steering angle $\delta$, the velocity $v_x$, and the yaw rate $\dot{\psi}$. It is also assumed that sensors to measure roll angle $\phi$ and pitch angle $\theta$ are available on the vehicle. Even if such a sensor is not provided as standard equipment, an electrolytic roll angle sensor can be implemented at minimal cost overhead (as contrasted with popular gyroscopic roll rate sensors proposed for anti-rollover systems). As an alternative, spring displacement sensors, commonly provided in SUV type vehicles, can also be used to obtain the roll and pitch angle information.

WO2007/098891 provides an arrangement for determining the longitudinal centre of gravity ($l_v$), CG height ($h$) and lateral CG position ($y$). The parameters $C_v$, $C_h$, $k$, $c$, $b$, $and$ $d$ are also assumed to be unknown. WO2007/098891 relies on the assumption that there exist compact intervals $C_v$, $C_h$, $L_v$, K, $C_c$, H, B, and D such that $C_v \in C_v$, $C_h \in C_h$, $l_v \in L_v$, $k \in K$, $c \in C_c$, $h \in H$, $b \in B$, and $d \in D$.

Operation of W02007/098891 will now be described.

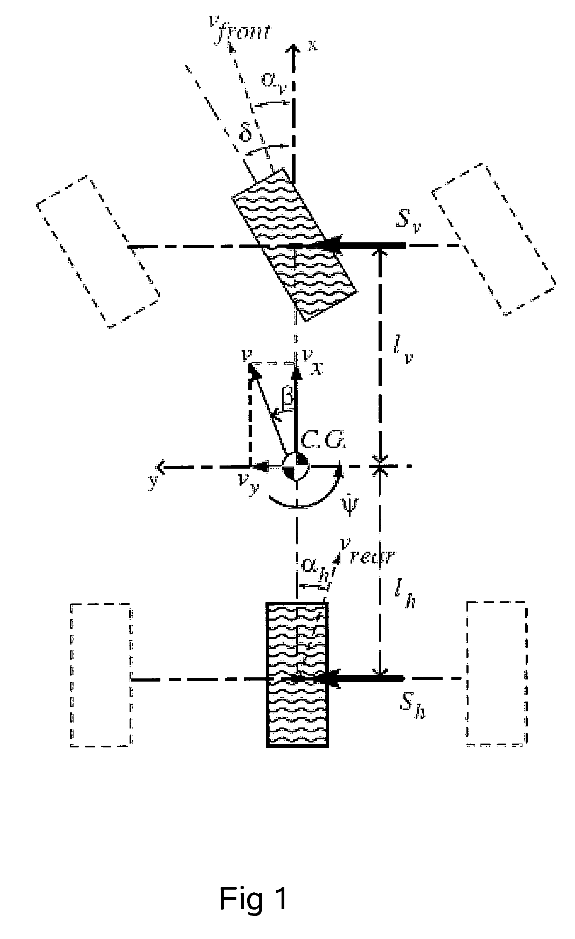

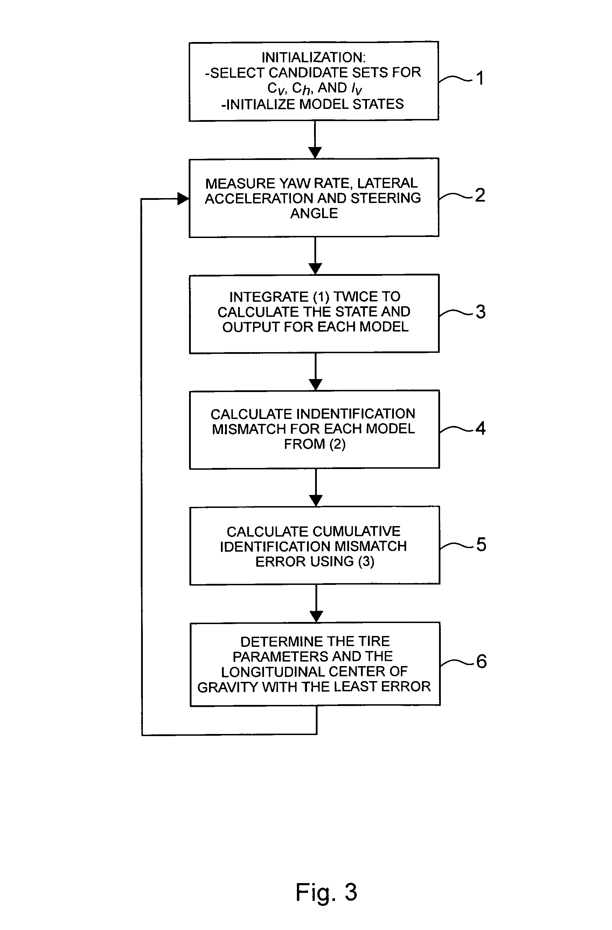

Figure 3 shows a flow chart describing a method for calculating the longitudinal CG location $l_v$ and the tyre stiffness parameters $C_v$ and $C_h$. This method will now be described with reference to Figure 1.

In Step 1 of Figure 3, candidate values for $l_v$ and the tyre stiffness parameters $C_v$ and $C_h$ are selected. To this end, let the true (and initially unknown) values for $l_v$, $C_v$ and $C_h$ belong to the sets: $L_v = \{l_{v1}, l_{v2}, \ldots, l_{vP}\}$, $C_v = \{C_{v1}, C_{v2}, \ldots, C_{vQ}\}$, and $C_h = \{C_{h1}, C_{h2}, \ldots, C_{hR}\}$, respectively. Note that estimates of these sets can be obtained using numerical simulations or field tests. In method step 1, we also construct $N = P \times Q \times R$ models whose state variables are $\beta_i$, and $\dot{\psi}_i$. Furthermore, the method sets $\beta(0) = 0$ and $\psi_i(0) = 0$, where $i = 1, 2, \ldots, N$.

In Step 2 of the method illustrated in Figure 3, the steering angle $\delta$, the lateral acceleration $a_y$, and the yaw rate $\dot{\psi}$ are measured using the available sensors.

In method Step 3 of Figure 3, the steering angle $\delta$ is used to calculate $(\beta_i(t), \dot{\psi}_i(t), a_{y,i}(t))$ for each model:

$$\dot{\beta}_i = \frac{C_{vq} + C_{hr}}{mv_x}\beta_i + \left(\frac{C_{hr}l_{hp} - C_{vq}l_{vp}}{mv_x^2} - 1\right)\dot{\psi}_i + \frac{C_{vq}}{mv_x}\delta,$$

$$\ddot{\psi}_i = \frac{C_{hr}l_{hp} - C_{vq}l_{vp}}{J_{zz}}\beta_i - \frac{C_{vq}l_{vp}^2 + C_{hr}l_{hp}^2}{J_{zz}v_x}\dot{\psi}_i + \frac{C_{vq}l_{vp}}{J_{zz}}\delta, \quad (1)$$

$$a_{y,i} = \frac{C_{vq} + C_{hr}}{m}\beta_i + \frac{C_{hr}l_{hp} - C_{vq}l_{vp}}{mv_x}\dot{\psi}_i + \frac{C_{vq}}{mv_x}\delta$$

where $i = (p-1)P + (q-1)Q + (r-1)R + 1$ denotes the model number with the parameters $(l_{vp}, C_{vq}, C_{hr})$ for $p = 1, 2, ... , P$, $q = 1, 2, ... , Q, r = 1, 2, ..., R$; $(\beta_i(t), \psi_i(t))$ is the state for the $i$-th model; and $l_{hp} = L - l_{vp}$.

In method Step 4 of Figure 3, the identification error $e_i(t)$ corresponding to the $i$-th model is calculated using equation 2.

$$e_i(t) = \begin{bmatrix} a_y(t) - a_{y,i}(t) \\ \dot{\psi}(t) - \dot{\psi}_i(t) \end{bmatrix}, \quad i = 1, 2, ..., N \quad (2)$$

In method Step 5 of Figure 3, the cumulative identification error $J_i(t)$ corresponding to the $i$-th model is calculated using Equation (3)

$$J_i(t) = \zeta\|e_i(t)\|^2 + \gamma\int_0^t e^{-\lambda(t-\tau)}\|e_i(t)\|^2 d\tau, \quad (3)$$

where $\zeta$, $\gamma$, and $\lambda$ are non-negative design parameters which can be appropriately chosen to weigh instantaneous and steady-state identification errors.

In method Step 6 of Figure 3, the model with the least cumulative identification error is calculated using

$$i^* = \arg_{i=1,...,N} \min J_i(t) \quad (4)$$

and the corresponding parameter values $(l_{vp}, C_{vq}, C_{hr})$ are obtained.

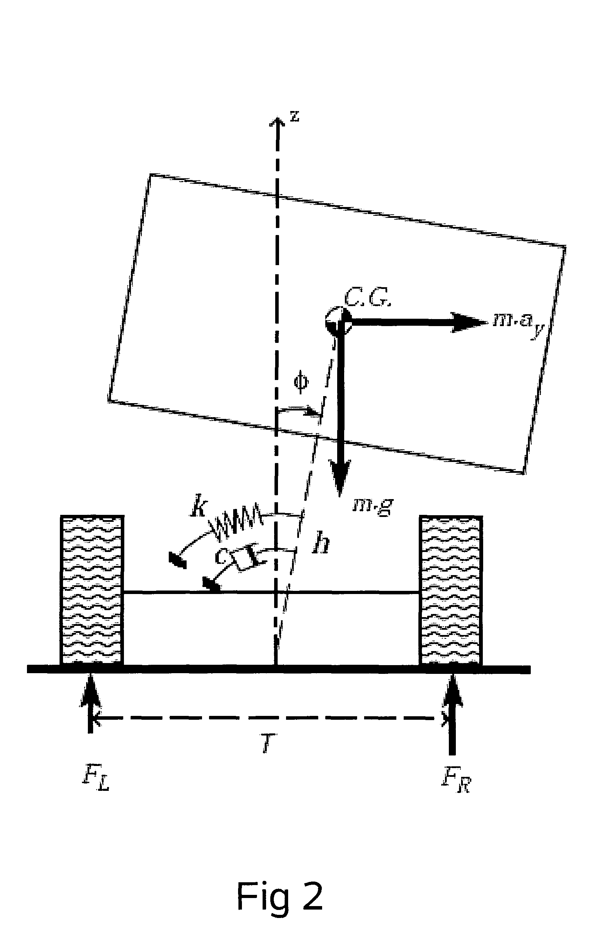

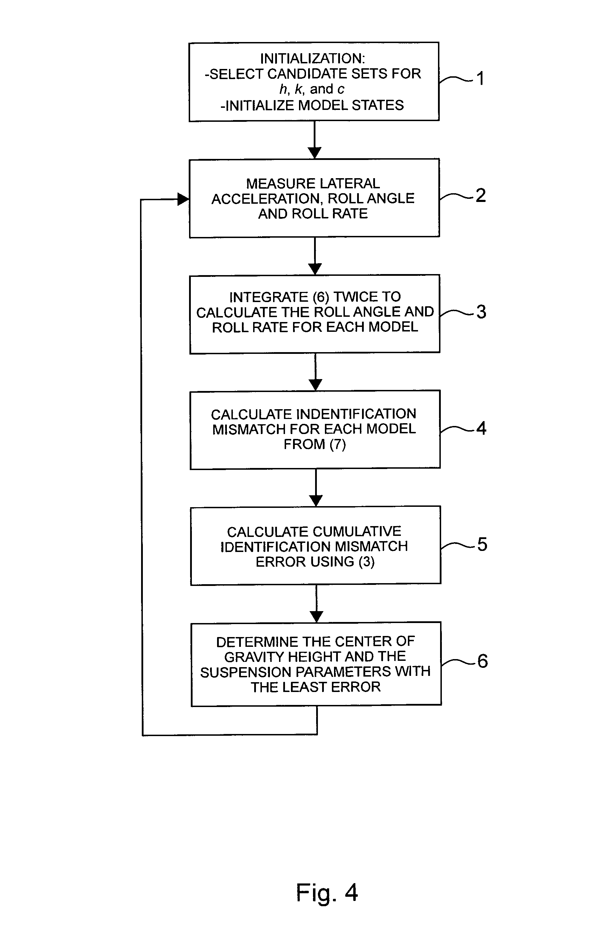

Figure 4 shows a flow chart describing a method for calculating the CG height $h$ and linear suspension parameters $k$ and $c$ of the roll plane, which can be used for rollover detection and prevention schemes. This method will now be described with reference to Figure 2.

In method step 1, sets of candidate values for $h$, $k$, and $c$ are selected. To this end, let the true values for $h$, $k$ and $c$ belong to the sets $\mathcal{H}$ = {$h_1, h_2, ... , h_P$}, K = {$k_1, k_2, ... , k_Q$}, and $C_c$ = {$c_1, c_2, ... , c_R$}, respectively. Similar to the calculation of the longitudinal centre of gravity, estimates of these sets can be obtained through numerical simulations or field tests.

In some cases WO2007/098891 relies on the assumptions that the exact value of the spring stiffncss $k$ is available and there exist constant, measurable steady-state values, $\phi_{ss}$ and $a_{y,ss}$, of the roll angle $\phi$ and the lateral acceleration $a_y$, respectively. In this case, the CG height can be calculated from Equation (5).

$$h = \frac{k\phi_{ss}}{m\left(g\phi_{ss} + a_{y,ss}\right)} \quad (5)$$

Although this method will work under specific manoeuvre and loading conditions, the variability in the suspension system requires accurate estimate of the spring stiffness. Such an estimate may not be available. Therefore the method described with reference to Figure 4 assumes that this is a variable.

In method Step 1 of Figure 4, we construct $N = P \times Q \times R$ models whose state variables are $\phi_1$ and $\dot{\phi}$, for $i = 1, 2, \ldots , N$. Furthermore, we set $\phi_i(0) = 0$, and $\dot{\phi}_i(0) = 0$ for $i = 1, 2, \ldots, N$.

In method Step 2 of Figure 4, the lateral acceleration $a_y$, the roll angle $\phi$, and the roll rate $\dot{\phi}$ are measured using vehicle sensors.

In method Step 3 of Figure 4, the lateral acceleration $a_y$ is used to integrate twice the following equation for each model

$$\ddot{\phi}_i = \frac{k_y - mgh_p}{J_{xx} + mh_p^2}\phi_i - \frac{c_r}{J_{xx} + mh_p^2}\dot{\phi}_i + \frac{mh_p}{J_{xx} + mh_p^2}a_y, \quad (6)$$

to calculate $\phi_i(t)$ and $\dot{\phi}_i(t)$ where $i = (p-1)P + (q-1)Q + (r-1)R + 1$ denotes the model number with the parameters ($h_p$, $k_q$, $c_r$) for $p = 1, 2, \ldots , P$, $q = 1, 2, \ldots , Q$, and $r = 1, 2, \ldots , R$.

In method Step 4 of Figure 4, the identification error $e_i(t)$ corresponding to the $i$-th model is calculated using Equation (7)

$$e_i(t) = \begin{bmatrix} \phi(t) - \phi_i(t) \\ \dot{\phi}(t) - \dot{\phi}_i(t) \end{bmatrix}, \quad i = 1,2,\ldots,N \quad (7)$$

In method Step 5 of Figure 4, the cumulative identification error $J_i(t)$ corresponding to the $i$-th model is calculated using Equation (3) with $e_i$ from Equation (7).

In method Step 6 of Figure 4, the model with the least cumulative identification error is calculated using

$$i^* = \arg_{i=1,\ldots,N} \min J_i(t), \quad (8)$$

and the corresponding parameter values ($h_p$, $k_q$, $c_r$) are obtained.

The method in Figure 4 can be extended to deal with mass variability by incorporating additional models in equation (6). To this end, the method first determines a set $M = \{m_1, m_2, \ldots , m_M\}$ denoting the mass variations of interest. For example, $m_1$ may denote the weight of the vehicle with one passenger, $m_2$ with two passengers, and so forth. Then, the models described in Equation (6) are modified to take variable mass into account, and the method represented in Figure 4 is applicable. The same extension can be made to the method described in Figure 3.

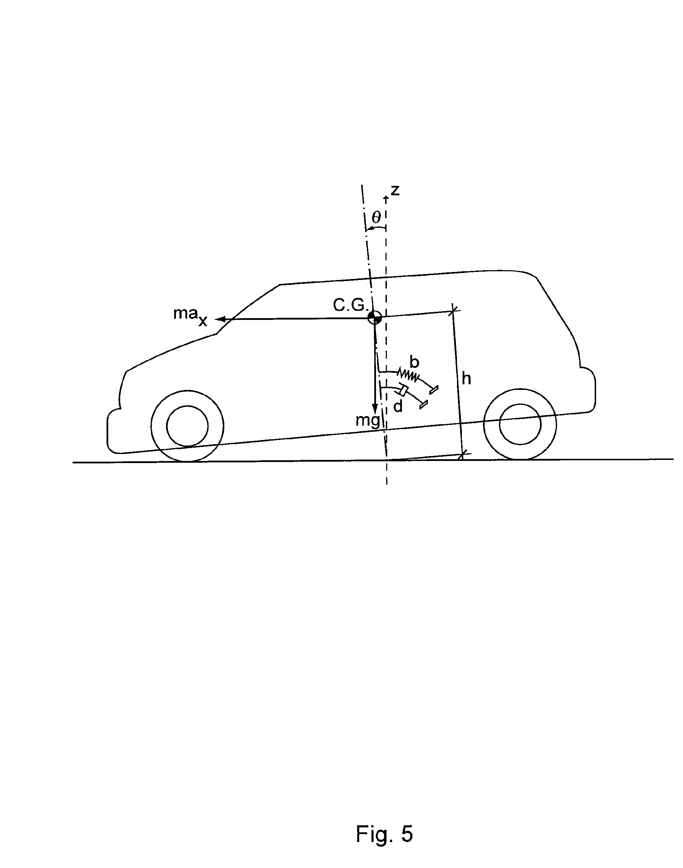

WO2007/098891 also discloses determining the CG height using longitudinal dynamics in the pitch plane during acceleration and deceleration phase of the vehicle, which is shown in Figure 5.

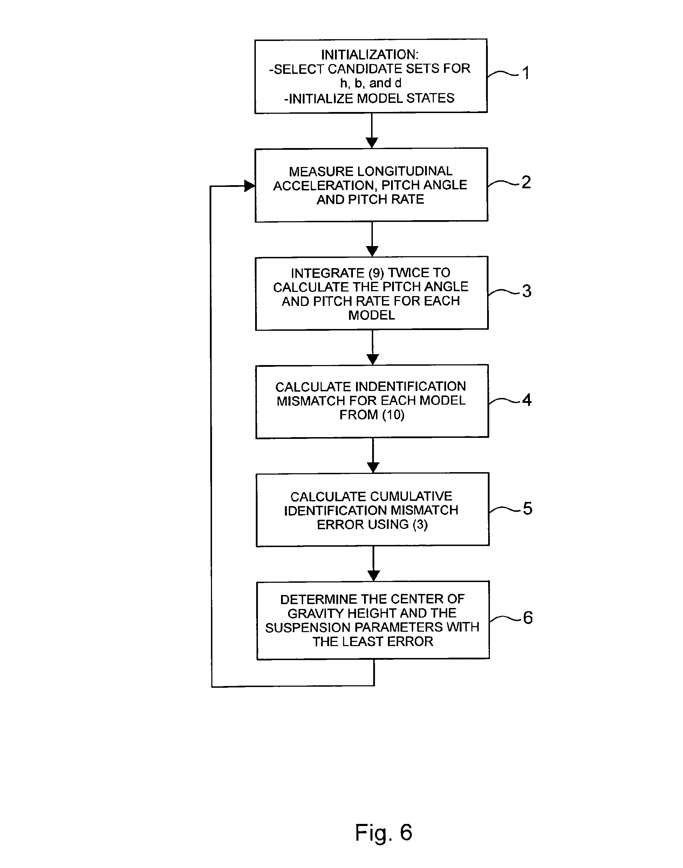

Figure 6 shows a flow chart describing a method for calculating the CG height $h$ and linear suspension parameters $b$ and $d$ of the pitch plane. This method will now be described.

In method step 1, sets of candidate values for $h, b,$ and $d$ are selected. To this end, let the true values for h, $b$ and $d$ belong to the sets $\mathcal{H} = \{h_1, h_2, \ldots , h_P\}$, $\mathcal{B} = \{b_1, b_2, \ldots , b_Q\}$, and $\mathcal{D} = \{d_1, d_2, \ldots , d_R\}$, respectively. Similar to the calculation of the longitudinal centre of gravity, estimates of these sets can be obtained through numerical simulations or field tests.

In method Step 1 of Figure 6, we construct $N = P \times Q \times R$ models whose state variables are $\theta_i$ and $\dot{\theta}_i$ for $i = 1, 2, \ldots, N$. Furthermore, we set $\theta_i(0) = 0$, and $\dot{\theta}_i(0) = 0$ for $i = 1, 2, \ldots, N$.

In method Step 2 of Figure 6, the longitudinal acceleration $a_x$, the pitch angle $\theta$, and the pitch rate $\dot{\theta}$ are measured using vehicle sensors.

In method Step 3 of Figure 6, the longitudinal acceleration $a_x$ is used to integrate twice the following equation for each model

$$\ddot{\theta}_i = \frac{b_q - mgh_p}{J_{yy} + mh_p^2} \theta_i - \frac{d_r}{J_{yy} + mh_p^2} \dot{\theta}_i + \frac{mh_p}{J_{yy} + mh_p^2} a_x, \quad (9)$$

to calculate $\theta_i(t)$ and $\dot{\theta}_i(t)$ where $i = (p-1)P + (q-1)Q + (r-1)R + 1$ denotes the model number with the parameters ($h_p$, $b_q$, $d_r$) for $p = 1, 2, \ldots, P$, $q = 1, 2, \ldots, Q$, and $r = 1, 2, \ldots, R$.

In method Step 4 of Figure 6, the identification error $e_i(t)$ corresponding to the $i$-th model is calculated using Equation (7)

$$e_i(t) = \begin{bmatrix} \theta(t) - \theta_i(t) \\ \dot{\theta}(t) - \dot{\theta}_i(t) \end{bmatrix}, \quad i = 1, 2, \ldots, N \quad (10)$$

In method Step 5 of Figure 6, the cumulative identification error $J_i(t)$ corresponding to the $i$-th model is calculated using Equation (3) with $e_i$ from Equation (10).

In method Step 6 of Figure 6, the model with the least cumulative identification error is calculated using

$$i^* = \arg_{i=1,\ldots,N} \min J_i(t), \quad (11)$$

and the corresponding parameter values ($h_p$, $b_q$, $d_r$) are obtained.

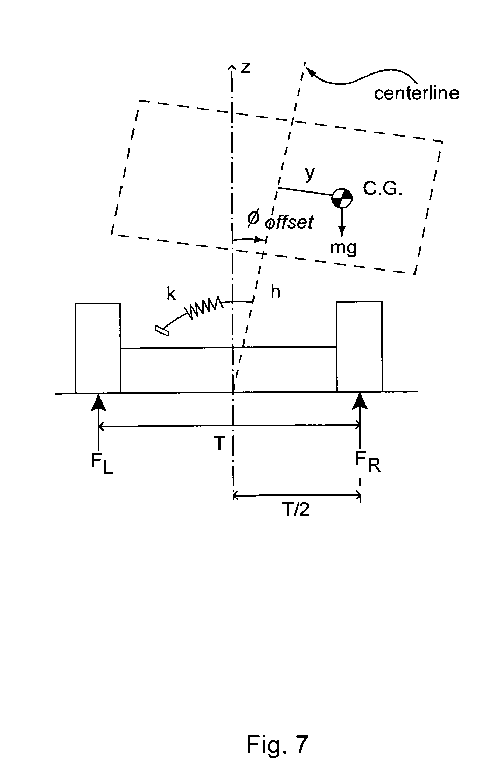

WO2007/098891 also discloses calculating the lateral shift of the CG position with respect to the vehicle centreline. This method relies on the assumption that the exact value of the spring stiffness $k$, and CG height $h$ are available, which is obtainable through the CG height estimation method using roll plane dynamics described above. This method is intended for straight, steady-state driving conditions and is based on the fact that a lateral shift of CG position relative to the vehicle centreline causes a lateral load transfer and a consequential offset in the roll angle, which we denote by $\phi_{offset}$ and assume that it is measured. The schematic of static system for this specific method is shown in Figure 7. In this case, the lateral position of the CG can be calculated from Equation (12)

$$y = \frac{k\phi_{offset}}{mg\cos(\phi_{offset})} - h\tan(\phi_{offset}). \quad (12)$$

The above techniques can also be applied for determining the loss of pressure or excessive tread wear in an individual or a plurality of tires for an automotive vehicle in real time utilizing existing vehicular sensors.

In the description of these embodiments of the present invention, the following additional notation will be adopted:

$C_{vl}$, $C_{vr}$     Front-left and front-right linear tire stiffness parameters, respectively.

$C_{hl}$, $C_{hr}$     Rear-left and rear-right linear tire stiffness parameters, respectively.

$F_{Zvl}$ $F_{Zvr}$     Front-left and front-right vertical tire forces, respectively.

$F_{Zhl}, F_{Zhr}$        Rear-left and rear-right vertical tire forces, respectively.

$S_{vl}, S_{vr}$        Front-left and front-right lateral tire forces, respectively.

$S_{hl}, S_{hr}$        Rear-left and rear-right lateral tire forces, respectively.

$\alpha_{vl}, \alpha_{vr}$        Front-left and front-right tire sideslip angles, respectively.

$\alpha_{hl}, \alpha_{hr}$        Rear-left and rear-right tire sideslip angles, respectively.

$\delta_{inner}, \delta_{outer}$        Inner and outer steering angles at the front tires, respectively.

As in WO2007/098891, standard sensor packs, routinely fitted to vehicles as part of lateral & yaw stability control systems (e.g. ESP), can be employed to implement the embodiments of the invention. Then given some further calculated parameters, more detailed and accurate vehicle models can be employed to determine additional aspects of vehicle behaviour.

In each of the embodiments, the estimation of CG position (i.e, $l_v$. $l_h$ and $h$) can be determined, for example, in accordance with WO2007/098891.

An aim of the first embodiment is to provide an arrangement for dynamically determining the individual tire cornering stiffness values $C_{vl}, C_{vr}, C_{hl}, C_{hr}$ for each of the four tires of a vehicle. In the present implementation, parameters $C_{vl}, C_{vr}, C_{hl}, C_{hr}$ are assumed to be unknown but their maximum stiffness values are known. The first embodiment relies on the assumption that when and if any of the tire cornering stiffness values are found to be smaller by a certain threshold level, then the corresponding tires must either have non-optimal pressure (under/over inflation) and/or reduced thread depth. Moreover, in order to account for the changeability in tire cornering stiffness thresholds for each tire, certain compact intervals $\mathbf{C_{vl}, C_{vr}, C_{hl}, C_{hr}}$ containing finite number of grid points can be defined such that, in each respective parameter set the grid points satisfy $C_{vl} \in C_{vl}, C_{vr} \in C_{vr}, C_{hf} \in C_{hl}$, and $C_{hr} \in C_{hr}$.

Moreover, these finite number grid points can be used to parameterize identification models, as will be described below, which can be used to recognize/estimate varying levels of tire pressure/thread depth failure. Note that the compact intervals $C_{vl}, C_{vr}, C_{hl}, C_{hr}$ represent the relationship between tire pressure (and/or thread depth loss) versus tire stiffness variation, and these can be obtained using field tests or tire test rig evaluations.

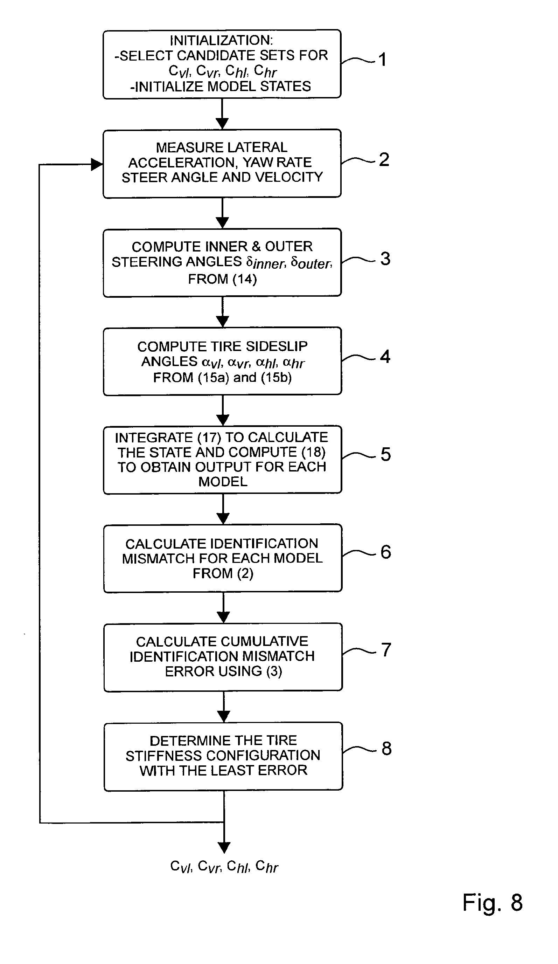

Referring now to Figure 8 which shows a flow chart describing an indirect estimation method based on lateral dynamics measurements for calculating cornering stiffness parameters $C_{vl}, C_{vr}, C_{hl}, C_{hr}$.

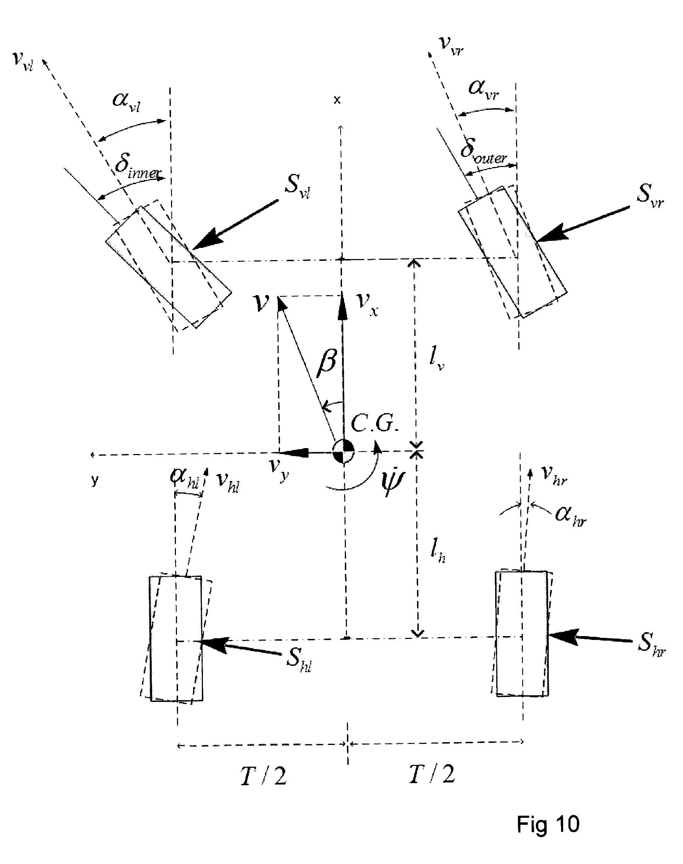

Figure 10 depicts a nonlinear model structure of the lateral dynamics of an automotive vehicle, which is utilized for the identification models. Assuming linear tire forces as a function of tire side slip angles, the dynamic model based on Figure 10 is as follows:

$$\dot{\beta} = \frac{1}{mv_x}\left[C_{vl}\alpha_{vl} + C_{vr}\alpha_{vr} + C_{hl}\alpha_{hl} + C_{hr}\alpha_{hr}\right] - \dot{\psi}$$

$$\ddot{\psi} = \frac{1}{J_{zz}}\left[(C_{vl}\alpha_{vl} + C_{vr}\alpha_{vr})l_v - (C_{hl}\alpha_{hl} + C_{hr}\alpha_{hr})l_h\right]$$

$$(13)$$

In Step 1 of Figure 8, candidate values/grid-points for $C_{vl}, C_{vr}, C_{hl}, C_{hr}$ are selected such that each corresponding set of values belong the compact intervals $C_{vl}, C_{vr}, C_{hl}, C_{hr}$. To this end, let the true (and initially unknown) cornering stiffness values belong to the following sets: $C_{vl} = \{C_{vl\_1}, Cv_{l\_2}, ... C_{vl\ P}\}$, $C_{vr} = \{C_{vr\_1}, C_{vr\_2}, ..., C_{vr\_Q}\}$, $C_{hl} = \{C_{hl\_1}, C_{hl\_2}, ... , C_{hl\_R}\}$, and $C_{hr} = \{C_{hr\_1}, C_{hr\_2}, ... , C_{hr\_S}\}$, respectively. In step 1 of Figure 8, we construct $N = P \times Q \times R \times S$ models a-priori, whose state variables are $\beta_i$ and $\dot{\psi}_i$, and where $i = 1, 2, ..., N$. Furthermore, the method assumes zero initial conditions for each identification model, that is $\beta_i = 0$ and $\dot{\psi}_i(0) = 0$ for each $i \in \{1, 2, ..., N\}$.

In Step 2 of Figure 8, the steering angle $\delta$, the vehicle velocity $v_x$, the lateral acceleration $a_y$, and the yaw rate $\dot{\psi}$ are measured using the available sensors.

In Step 3 of Figure 8; the steering column angle $\delta$ is used to compute the asymmetric steering angles for the inner and outer front wheels $\delta_{inner}$ and $\delta_{outer}$, respectively, as follows

$$\delta_{inner} = \delta^2 \frac{T}{2L} - \delta, \quad \text{and} \quad \delta_{outer} = \delta - \delta^2 \frac{T}{2L} \qquad (14)$$

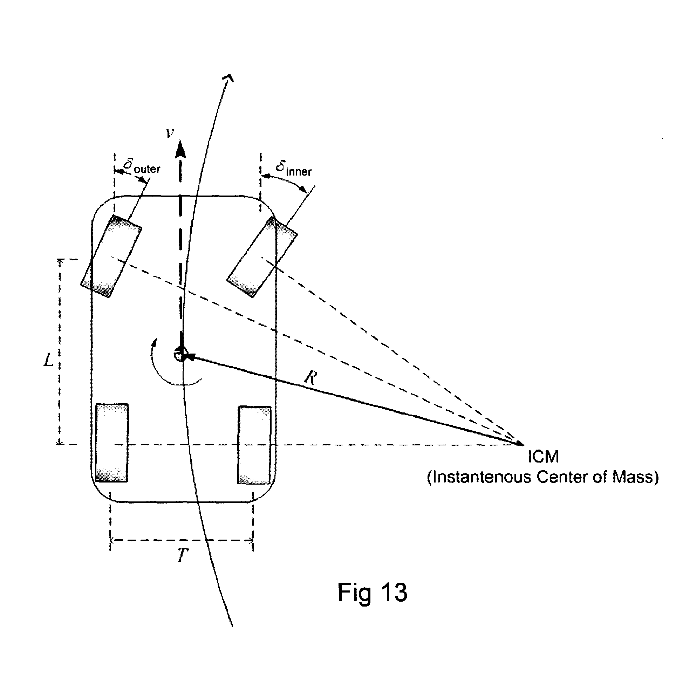

which are obtained with reference to Figure 13. We note that the expressions (14) are based on a simplified model for the rotation of the front wheels depicted on Figure 13. Nonetheless, it will be appreciated that it is possible to compute the asymmetric steering angles using alternative, more complicated steering geometries, or utilizing lookup tables based on real measurements.

In Step 4 of Figure 8, the inner and outer steering angles $\delta_{inner}$ and $\delta_{outer}$, the vehicle velocity $v_x$, and the yaw rate $\dot{\psi}$ are used to compute the tire sideslip angles at each wheel depending on the turning direction as follows:

$$\text{if turning left} \atop (\text{i.e., } \delta > 0) \quad \begin{cases} \alpha_{vl} = \delta_{inner} - \arctan\left(\dfrac{v_x\beta + \dot{\psi}l_v}{v_x - 0.5\dot{\psi}T}\right) \\[2mm] \alpha_{vr} = \delta_{outer} - \arctan\left(\dfrac{v_x\beta + \dot{\psi}l_v}{v_x + 0.5\dot{\psi}T}\right) \\[2mm] \alpha_{hl} = -\arctan\left(\dfrac{v_x\beta - \dot{\psi}l_h}{v_x - 0.5\dot{\psi}T}\right) \\[2mm] \alpha_{hr} = -\arctan\left(\dfrac{v_x\beta - \dot{\psi}l_h}{v_x + 0.5\dot{\psi}T}\right) \end{cases} \qquad (15a)$$

$$\text{if turning right} \atop (\text{i.e., } \delta < 0) \quad \begin{cases} \alpha_{vl} = \delta_{outer} - \arctan\left(\dfrac{v_x\beta + \dot{\psi}l_v}{v_x - 0.5\dot{\psi}T}\right) \\[2mm] \alpha_{vr} = \delta_{inner} - \arctan\left(\dfrac{v_x\beta + \dot{\psi}l_v}{v_x + 0.5\dot{\psi}T}\right) \\[2mm] \alpha_{hl} = -\arctan\left(\dfrac{v_x\beta - \dot{\psi}l_h}{v_x - 0.5\dot{\psi}T}\right) \\[2mm] \alpha_{hr} = -\arctan\left(\dfrac{v_x\beta - \dot{\psi}l_h}{v_x + 0.5\dot{\psi}T}\right) \end{cases} \qquad (15b)$$

In equations (15a) and (15b) the measurement of the vehicle sideslip angle $\beta$ can be obtained using the available measurements from:

$$\beta(t) = \int_0^t \left(\frac{a_y(\tau)}{v(\tau)} - \dot{\psi}(\tau)\right) d\tau \qquad (16)$$

Alternatively, state observers can also be used to obtain an estimate of $\beta$ to use in conjunction with tire slip calculations in (15a) and (15b).

In Step 5 of Figure 8, the vehicle velocity $v_x$, and the yaw rate $\dot{\psi}$ are used to calculate $\beta_i(t)$, $\dot{\psi}_i(t)$ for each model from:

$$\dot{\beta}_i = \frac{1}{mv_x}\left[C_{vl\_p}^{\cdot}\alpha_{vl} + C_{vr\_q}^{\cdot}\alpha_{vr} + C_{hl\_r}^{\cdot}\alpha_{hl} + C_{hr\_s}^{\cdot}\alpha_{hr}\right] - \dot{\psi}_i$$

$$\ddot{\psi}_i = \frac{1}{J_{zz}}\left[(C_{vl\_p}^{\cdot}\alpha_{vl} + C_{vr\_q}^{\cdot}\alpha_{vr})l_v - (C_{hl\_r}^{\cdot}\alpha_{hl} + C_{hr\_s}^{\cdot}\alpha_{hr})l_h\right]$$

(17)

where $(\beta_i(t), \dot{\psi}_i(t))$ is the state for the $i$-th model. Using (17) one can further compute the lateral acceleration output $a_{y,t}$ (t) corresponding to each model from:

$$a_{y,i} = \frac{1}{m}\left[C_{vl\_p}^{\cdot}\alpha_{vl} + C_{vr\_q}^{'}\alpha_{vr} + C_{hl\_r}^{\cdot}\alpha_{hl} + C_{hr\_s}^{\cdot}\alpha_{hr}\right]$$

(18)

where $i = (p-1)Q\times R\times S+(q-1)\times R\times S+(r-1)\times S+s$ denotes the model number with the parameters $(C_{vl\_p}, C_{vr\_q}, C_{hl\_r}, C_{hr\_s})$ and where the indices $p,q,r,s$ are defined as $p =1,2,...,P$ ; $q = 1,2,..., Q$ ; $r = 1,2,..., R$ ; and $s = 1,2,...,S$.

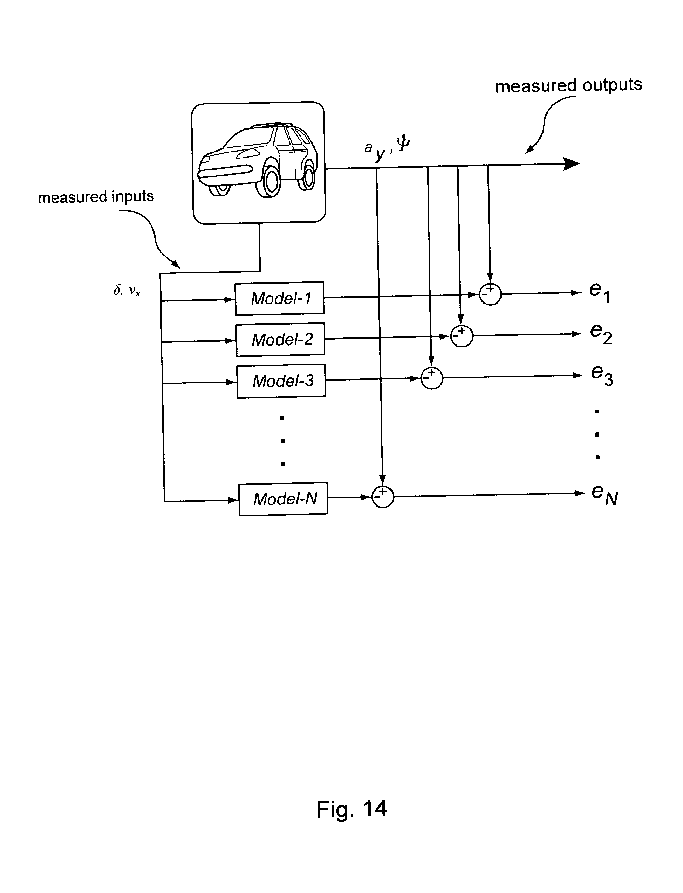

In Step 6 of Figure 8, the identification error $e_i(t)$ corresponding to the $i$-th model is calculated using equation (2) from the first embodiment, where the multiple model estimation structure to compute $e_i(t)$ is depicted in Figure 14.

In Step 7 of Figure 8, the cumulative identification error $J_i(t)$ corresponding to the $i$-th model identification error is calculated using Equation (3) from the first embodiment, where $\zeta$, $\gamma$, and $\lambda$ are non-negative design parameters which can be appropriately chosen to weigh instantaneous and steady-state identification error measures.

In Step 8 of Figure 8, the model with the least cumulative identification error is calculated using equation (4) from WO2007/098891 and the corresponding parameter values $(C_{vl\_p}, C_{vr\_q}, C_{hl\_r}, C_{hr\_s})$ are obtained.

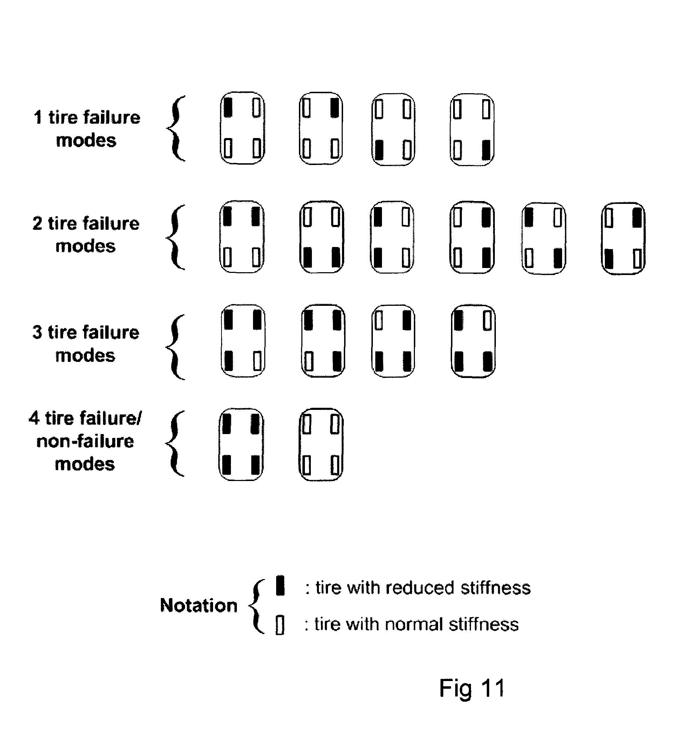

In the most basic implementation of the method depicted in Figure 8, the models are constructed to detect a fixed and predetermined level of stiffness reduction in any combinations of the tires. In this case, one needs a minimum of 16 models which correspond to all different combinations of tire failures (in the predetermined levels) in each of the tires; this is illustrated in Figure 11. Note that this case can be obtained in steps (5)-(8) by setting $p=Q=R=S=2$.

In a further embodiment, a varying number of stiffness thresholds can be implemented in conjunction with the method such that $C_{vl}\in C_{vl}$, $C_{vr}\in C_{vr}$, $C_{hl}\in C_{hl}$, and $C_{hr}\in C_{hr}$ as described in steps (5)-(8) above.

An aim of the second embodiment is to provide an arrangement for dynamically determining the individual tire cornering stiffness values $C_{vl}$, $C_{vr}$, $C_{hl}$, $C_{hr}$ for each of the four tires, taking into account time variations in the vertical loads $F_{Zvl}$, $F_{Zvr}$, $F_{Zhl}$, $F_{Zhr}$ on each tire.

To begin, the side force acting on each tire $S_{ij}$, where the first index $i=\{v,h\}$ denotes "front" and "rear", and second index $j=\{l,r\}$ denotes "left" and "right" respectively, is given by:

$$S_{ij} = C_{ij}^{\cdot}(F_{Zij})\alpha_{ij}, \qquad \text{where } i = \{v, h\} \text{ and } j = \{l, r\}$$

(19)

where $\alpha_{ij}$ is the side slip angle of the corresponding tires and tire stiffnesses $C_{ij}(F_{Zij})$ are time-varying functions of the corresponding vertical forces.

As in the first embodiment, tire cornering stiffness parameters $C_{ij}(F_{Zij})$ are assumed to be unknown but their nominal values corresponding to manufacturer-recommended pressure levels and for varying vertical loads are known. Again, this embodiment relies on the assumption that when and if any of the time-varying tire cornering stiffness values (and effectively the corresponding lateral forces) are found to be smaller than nominal levels by a certain threshold amount, then the corresponding tires must either have a non-optimal pressure (i.e., under/over inflation) and/or a persistent loss of grip as a result of reduced thread depth. Note that the variation of the tire cornering stiffness with respect to loss of inflation pressure or loss of tire thread depth will vary between different tire types, but these can be measured off-line by tire manufacturers through test rig evaluations.

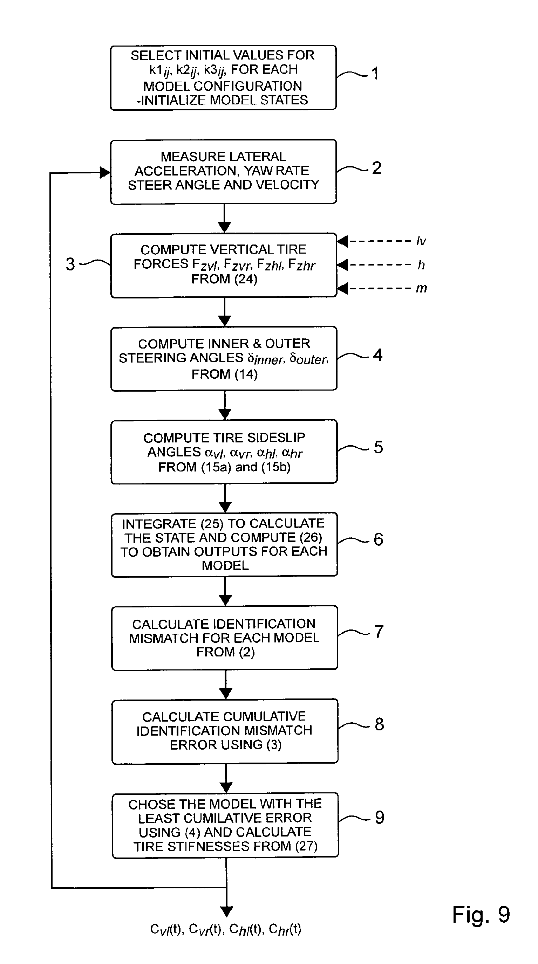

Referring now to Figure 9 which shows a functional block diagram describing an indirect estimation method based on lateral dynamics measurements for calculating lateral tire forces and the corresponding cornering stiffness parameters $C_{vl}(F_{Zvl})$, $C_{vr}(F_{Zvr})$, $C_{hl}(F_{Zhl})$, $C_{hr}(F_{Zhr})$.

Assuming constant vehicle speed $v_x$ and a small steering angle $\delta$ then the dynamic model based on Figure 10 is expressed as follows:

$$\dot{\beta} = \frac{1}{mv_x}\left[S_{vl} + S_{vr} + S_{hl} + S_{hr}\right] - \dot{\psi}$$

$$\ddot{\psi} = \frac{1}{J_{zz}}\left[(S_{vl} + S_{vr})l_v - (S_{hl} + S_{hr})l_h\right]$$

(20)

Note here that $S_{ij}$ are non-linear functions of corresponding vertical tire forces $FZ_{ij}$ and tire sideslip angles as described in equation (21):

$$\left.\begin{array}{l} S_{vl} = (k_{1vl} - \dfrac{F_{Zvl}}{k_{2vl}})F_{Zvl}\arctan(k_{3vl}\alpha_{vl}) \\[2ex] S_{vr} = (k_{1vr} - \dfrac{F_{Zvr}}{k_{2vr}})F_{Zvr}\arctan(k_{3vr}\alpha_{vr}) \\[2ex] S_{hl} = (k_{1hl} - \dfrac{F_{Zhl}}{k_{2hl}})F_{Zhl}\arctan(k_{3hl}\alpha_{hl}) \\[2ex] S_{hr} = (k_{1hr} - \dfrac{F_{Zhr}}{k_{2hr}})F_{Zhr}\arctan(k_{3hr}\alpha_{hr}) \end{array}\right\}$$

(21)

The lateral tire model suggested in equation (21) is provided for exemplary purposes only and it will be appreciated that other alternative models can be used within the scope of the present invention.

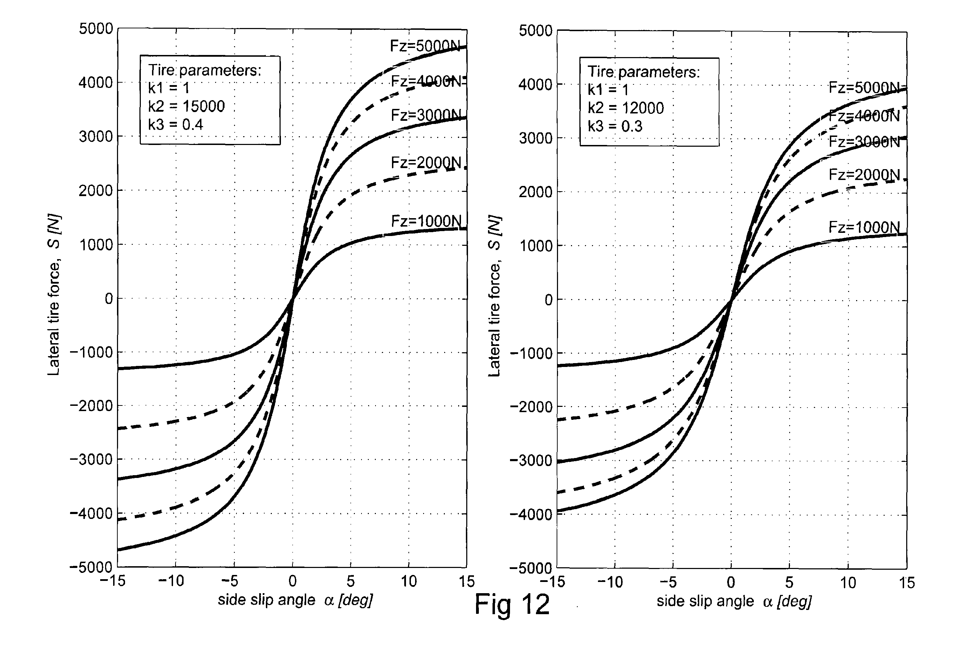

In step 1 of Figure 9, we construct 16 models *a-priori,* whose state variables are $\beta_i$ and $\dot{\psi}_i$, and where $i = 1,2,...,$ 16. These models of the form (20) are initialized such that each model corresponds to a fixed and predetermined level of cornering stiffness reduction in any combinations of the tires. In this case one needs 16 models (including the nominal model with no tire failures) which correspond to all different combinations of tire failures (in the predetermined levels) in each of the tires; this is illustrated in Figure 11. In order to model the reduction of nonlinear cornering stiffnesses, we choose the parameters $k_{1ij}$, $k_{2ij}$, $k_{3ij}$ for $i=\{v,h\}$ and $j=\{l,r\}$ accordingly in these 16 models. In Figure 12 we provide two examples to demonstrate the nonlinear lateral tire force variation as a function of changing vertical loads and changing sideslip angles, as described in equation (21), for two different tire setups. For example, the variation on the left side of Figure 12 can be considered to be a nominal tire force variation, whereas the right side plot can be considered to be a pressure compromised tire force variation.

The postulated model structure can eventually be expressed as follows:

$$\dot{\beta}_i = \frac{1}{mv_x}\left[S_{vl,i} + S_{vr,i} + S_{hl,i} + S_{hr,i}\right] - \dot{\psi}_i$$

$$\ddot{\psi}_i = \frac{1}{J_{zz}}\left[(S_{vl,i} + S_{vr,i})l_v - (S_{hl,i} + S_{hr,i})l_h\right]$$

(22)

$$S_{vl,i} = (k_{1vl,i} - \frac{F_{Zvl}}{k_{2vl,i}})F_{Zvl}\arctan(k_{3vl,i}\alpha_{vl})$$

$$S_{vr,i} = (k_{1vr,i} - \frac{F_{Zvr}}{k_{2vr,i}})F_{Zvr}\arctan(k_{3vr,i}\alpha_{vr})$$

$$S_{hl,i} = (k_{1hl,i} - \frac{F_{Zhl}}{k_{2hl,i}})F_{Zhl}\arctan(k_{3hl,i}\alpha_{hl})$$

$$S_{hr,i} = (k_{1hr,i} - \frac{F_{Zhr}}{k_{2hr,i}})F_{Zhr}\arctan(k_{3hr,i}\alpha_{hr})$$

$$(23)$$

where $i$ = 1,2,...,16. Furthermore, the method assumes zero initial conditions for each identification model, that is $\beta_i(0)$ = 0 and $\dot{\psi}_i(0)$ = 0 for $i$=1,2,...,16.

In Step 2 of Figure 9, the steering angle ($\delta$), the vehicle velocity (v), the lateral acceleration (ay), and the yaw rate $\dot{\psi}$ are measured using the available vehicle sensors.

In Step 3 of Figure 9, given the measurement of lateral acceleration ($a_y$), and provided suitable estimates of the longitudinal position of CG ($l_v$, $l_h$), the CO height (h), and the vehicle mass (m), individual vertical tire forces corresponding to each tire are computed according to the following relations:

$$F_{Zvl} = \frac{ml_h}{2L}g - \frac{ml_h h}{LT}a_y$$

$$F_{Zvr} = \frac{ml_h}{2L}g + \frac{ml_h h}{LT}a_y$$

$$F_{Zhl} = \frac{ml_v}{2L}g - \frac{ml_v h}{LT}a_y$$

$$F_{Zhr} = \frac{ml_v}{2L}g + \frac{ml_v h}{LT}a_y$$

$$(24)$$

which are derived assuming a constant longitudinal vehicle speed to be consistent with the assumptions of equation (20).

In Step 4 of Figure 9, the steering column angle $\delta$ is used to compute the asymmetric steering angles for the inner and outer front wheels $\delta_{inner}$ and $\delta_{outer}$, respectively, as in equation (14) from the first embodiment.

In Step 5 of Figure 9, the inner and outer steering angles $\delta_{inner}$ and $\delta_{outer}$, the vehicle velocity $v_x$, and the yaw rate $\dot{\psi}_i$ are used to compute the tire sideslip angles at each wheel depending on the turning direction as in equations (15a) and (15b) from the first embodiment.

In Step 6 of Figure 9, the measured vehicle velocity $v_x$, calculated lateral tire forces $S_{ij}$ (according to (23)) along with the estimates of $l_v$, and $m$ are used to calculate $\beta_i(t)$, $\dot{\psi}_i(t)$ for each model using:

$$\dot{\beta}_i = \frac{1}{mv_x}\left[S_{vl,i} + S_{vr,i} + S_{hl,i} + S_{hr,i}\right] - \dot{\psi}_i$$

$$\ddot{\psi}_i = \frac{1}{J_z}\left[(S_{vl,i} + S_{vr,i})l_v - (S_{hl,i} + S_{hr,i})(L - l_v)\right]$$

$$(25)$$

where ($\beta_i(t)$, $\psi_i(t)$) is the state pair for the $i$-th model. Using this state pair one can further compute the lateral acceleration output $a_{y,i}(t)$ corresponding to each model from:

$$a_{y,i} = v[\dot{\beta}_i + \dot{\psi}_i] = \frac{1}{m}\left[S_{vl,i} + S_{vr,i} + S_{hl,i} + S_{hr,i}\right] \qquad (26)$$

In Step 7 of Figure 9, given vehicle sensor measurements $a_y$ and $\psi$, the identification error $e_i(t)$ corresponding to the $i$-th model is calculated using equation (2) from WO2007/098891.

In Step 8 of Figure 9, the cumulative identification error $J_i(t)$ corresponding to the $i$-th model identification error is calculated using equation (3) from WO2007/098891.

In Step 9 of Figure 9, the model with the least cumulative identification error is calculated using equation (4) of WO2007/098891.

Note that from the selected model with the index $i^*$, the instantaneous tire stiffness variations corresponding to each tire can be obtained from:

$$
\left.
\begin{array}{ll}
C_{vl}(t) = C_{vl,i^*}(F_{Zvl}) = \dfrac{S_{vl,i^*}}{\alpha_{vl,i^*}}, & C_{vr}(t) = C_{vr,i^*}(F_{Zvr}) = \dfrac{S_{vr,i^*}}{\alpha_{vr,i^*}} \\[3ex]
C_{hl}(t) = C_{hl,i^*}(F_{Zhl}) = \dfrac{S_{hl,i^*}}{\alpha_{hl,i^*}}, & C_{hr}(t) = C_{hr,i^*}(F_{Zhr}) = \dfrac{S_{hr,i^*}}{\alpha_{hr,i^*}}
\end{array}
\right\} \qquad (27)
$$

where $t$ denotes the instant of time.

In a further embodiment of the method depicted in Figure 9, more sets of 16 models based on equations (22) and (23) and as described in Figure 11 can be used, where each set of 16 models are initialized with different nonlinear lateral tire force characteristics as determined by the parameters $k_{1ij}$, $k_{2ij}$, $k_{3ij}$ for $i=\{v,h\}$ and $j=\{l,r\}$. In this way varying levels of tire failures resulting from pressure drop and/or thread wear can be detected.

A further variation of the described estimation methods can be obtained when one considers the friction variations in the road surface. It is known that road friction may change depending on the type of surface that the car is on, and this will affect the amount of lateral traction available. A further multiplier in equation (23) may be included to take the road friction changes into account. It is known that modern braking systems such as ABS can provide estimations of the road friction coefficient and given this information more refined estimations can be achieved.

When the information on the existence of a compromised tire pressure or thread depth on a specific wheel is not required, a simplification of the first embodiment can be used. In this case, a simplified model lumps the right and left tires together, representing these by a single tire at the vehicle centreline. Thus, this model only specifies the specific axle with the tire fault. This in most cases is sufficient to warn the driver. For example as specified in the TREAD Act in US, the mandatory tire pressure monitoring system needs to inform the driver if there is a 25% reduction in any of the tires. In other words, the monitoring system mandated by the TREAD Act is required only to inform the driver about the presence of the tire problem, not the specific tyre/tyres that it belongs to. In this respect, a third embodiment which will be described below readily meets the requirements of the TREAD Act and similar legislation.

The aim of the third embodiment is to provide an arrangement for dynamically determining the front and rear-axle tire cornering stiffness values $C_v$, $C_h$ of a vehicle. In the present implementation, the parameters $C_v$, $C_h$ are assumed to be unknown but their maximum stiffness values are known. Again the embodiment relies on the assumption that when and if any of the front or rear-axle tire cornering stiffness values are found to deviate by a certain threshold level, then the corresponding axles must have tires with non-optimal pressure (under/over inflation) and/or reduced thread depth. Moreover, in order to account for the changeability in tire cornering stiffness thresholds for each tire, certain compact intervals $\mathbf{C}_v$, $\mathbf{C}_h$ containing finite number of grid points can be defined such that, in each respective parameter set, the grid points satisfy $C_v \in \mathbf{C}_v$ and $C_h \in \mathbf{C}_h$. Moreover, these finite number grid points can be used to parameterize identification models, as will be described below, which can be used to recognize/estimate varying levels of tire pressure/thread depth failure.

Referring now to Figure 3 which shows a flow chart describing an indirect estimation method based on lateral dynamics measurements for calculating cornering stiffness parameters $C_v$, $C_h$. For the purpose of tire condition monitoring we will assume that the longitudinal position of CG ($l_v$) is either known (it happens that this parameter does not vary significantly in certain types of vehicles such as compact cars) or estimations of it is provided, for example, using the method in WO2007/098891.

In the embodiment, in Step 1 of Figure 3, candidate values for tire stiffness parameters $C_v$ and $C_h$ are selected

such that $C_v = \{C_{v1}, C_{v2}, \ldots, C_{vQ}\}$, and $C_h = \{C_{h1}, C_{h2}, \ldots, C_{hR}\}$. Note that estimates of these sets can be obtained using numerical simulations or field tests to represent varying levels of tire pressure/wear conditions. In method step 1, we construct $N = Q \times R$ models with zero initial conditions, whose state variables are $\beta_i$, and $\dot{\psi}_i$, where $i = 1,2,\ldots, N$.

In Step 2 of the method illustrated in Figure 3, the steering angle $\delta$, the lateral acceleration $\alpha_y$, the yaw rate $\dot{\psi}$, and vehicle speed $v_x$ are measured using the available sensors.

In method Step 3 of Figure 3, the steering angle $\delta$ and speed $v_x$ is used to calculate $(\beta_i(t), \dot{\psi}_i(t), \alpha_{yi}(t))$ from (1) where $i = (q-1)R+r$ denotes the model number with the parameters $(C_{vq}, C_{hr})$ for $q = 1, 2, \ldots, Q$, $r = 1, 2, \ldots, R$.

In method Step 4 and 5 of Figure 3, the identification error $e_i(t)$, and the cumulative identification error $J_i(t)$, corresponding to the $i$-th model is calculated using equations (2) and (3) respectively. In Step 6 of Figure 3, the model with the least cumulative identification error is calculated using equation (4) and rather than center of gravity as in Figure 3, the corresponding parameter values $C_{vq}, C_{hr}$ are obtained.

In the most simplified implementation of the third embodiment, one needs only 2 stiffness values in each front and rear tyre parameter sets such that $C_v = \{C_{v1}, C_{v2}\}$, and $C_h = \{C_{h1},$

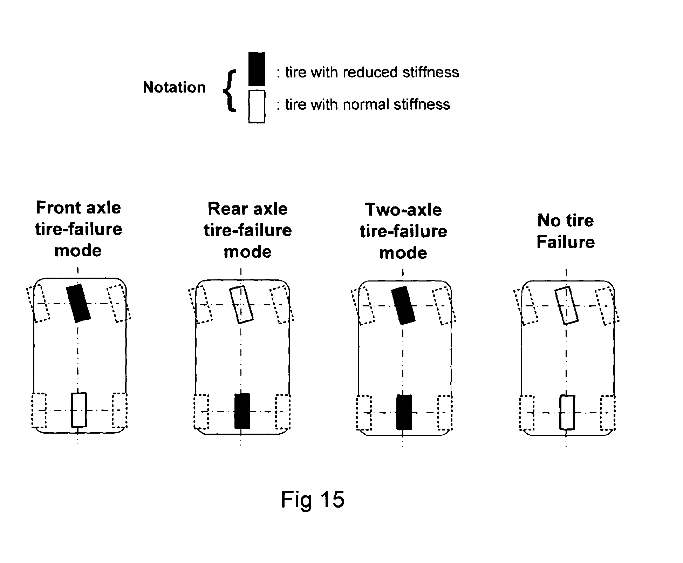

$C_{h2}\}$, where one of the parameters in each set corresponds to the stiffness at the recommended pressure values, whereas the other represent the compromised tire stiffness value. In this way one obtains 4 combinations of models that represent the vehicle dynamics subject to different failure modes. This is represented in Figure 15.

All of the embodiments described above can be extended to deal with mass variability by incorporating additional models in the form of equations (17) and (22). To this end, the method first determines a set $M = \{m_1, m_2, \ldots, m_k\}$ denoting the mass variations of interest. For example, $m_1$ may denote the weight of the vehicle with one passenger, $m_2$ with two passengers, and so forth. Then, the models described in equation (17) and (22) are modified to take variable mass into account.

**Claims**

1. A method of determining the tire conditions of a vehicle comprising:

   a. constructing a plurality of models of vehicle behaviour, each model being associated with one or more tires having varying cornering stiffness;
   b. measuring vehicle behaviour during a cornering manoeuvre of the vehicle;
   c. comparing measured vehicle behaviour with behaviour predicted by said models; and
   d. determining which of said models most effectively predicts the behaviour of the vehicle.

2. A method according to claim 1 wherein each model corresponds to a distinct tire failure mode in which cornering stiffness varies as a result of tire pressure variation and/or thread wear in one or more tires of said vehicle.

3. A method according to claim 1 in which each model is further associated with a specific vertical load on each tire.

4. A method according to claim 3 wherein said vertical load is calculated as a function of vehicle mass, lateral acceleration and vehicle centre of gravity.

5. A method according to claim 4 comprising calculating said vehicle centre of gravity according to the following steps:

   a. constructing a plurality of models of vehicle behaviour, each model including a plurality of known and unknown parameters that determine vehicle behaviour including parameters that define the position of the centre of gravity;
   b. measuring vehicle behaviour during operation of the vehicle;
   c. comparing measured vehicle behaviour with behaviour predicted by the models; and
   d. determining which of the models most effectively predicts behaviour of the vehicle.

6. A method according to claim 3 comprising calculating sideslip at each tire as a function of vehicle steering angle, sideslip at the vehicle centre of gravity, yaw rate and vehicle velocity.

7. A method according to claim 1 comprising:

   • measuring vehicle speed and steering angle;
   • computing lateral acceleration and yaw rate for each model;
   • computing an identification error for each model based on said measured lateral acceleration and yaw rate; and
   • selecting the model having a minimum cost function based on said identification error at a given time instant to infer the tire conditions associated with said model.

8. A method according to claim 1 wherein each model is associated with one of over/under inflation of one or more tires; a particular level of tire wear; a particular type of tire; a particular type of wheel; or any combination thereof.

Fig 1

Fig 2

INITIALIZATION:
-SELECT CANDIDATE SETS FOR $C_v$, $C_h$, AND $l_v$
-INITIALIZE MODEL STATES  — 1

MEASURE YAW RATE, LATERAL ACCELERATION AND STEERING ANGLE — 2

INTEGRATE (1) TWICE TO CALCULATE THE STATE AND OUTPUT FOR EACH MODEL — 3

CALCULATE INDENTIFICATION MISMATCH FOR EACH MODEL FROM (2) — 4

CALCULATE CUMULATIVE IDENTIFICATION MISMATCH ERROR USING (3) — 5

DETERMINE THE TIRE PARAMETERS AND THE LONGITUDINAL CENTER OF GRAVITY WITH THE LEAST ERROR — 6

Fig. 3

**Fig. 4**

Fig. 5

Fig. 6

Fig. 7

INITIALIZATION:
-SELECT CANDIDATE SETS FOR
$C_{vl}, C_{vr}, C_{hl}, C_{hr}$
-INITIALIZE MODEL STATES — 1

MEASURE LATERAL
ACCELERATION, YAW RATE
STEER ANGLE AND VELOCITY — 2

COMPUTE INNER & OUTER
STEERING ANGLES $\delta_{inner}, \delta_{outer}$,
FROM (14) — 3

COMPUTE TIRE SIDESLIP
ANGLES $\alpha_{vl}, \alpha_{vr}, \alpha_{hl}, \alpha_{hr}$
FROM (15a) and (15b) — 4

INTEGRATE (17) TO CALCULATE
THE STATE AND COMPUTE (18)
TO OBTAIN OUTPUT FOR EACH
MODEL — 5

CALCULATE IDENTIFICATION
MISMATCH FOR EACH MODEL
FROM (2) — 6

CALCULATE CUMULATIVE
IDENTIFICATION MISMATCH
ERROR USING (3) — 7

DETERMINE THE TIRE
STIFFNESS CONFIGURATION
WITH THE LEAST ERROR — 8

$C_{vl}, C_{vr}, C_{hl}, C_{hr}$

Fig. 8

SELECT INITIAL VALUES FOR
$k1_{ij}$, $k2_{ij}$, $k3_{ij}$, FOR EACH
MODEL CONFIGURATION
-INITIALIZE MODEL STATES ~ 1

MEASURE LATERAL
ACCELERATION, YAW RATE
STEER ANGLE AND VELOCITY ~ 2

3 ~ COMPUTE VERTICAL TIRE
FORCES $F_{zvl}$, $F_{zvr}$, $F_{zhl}$, $F_{zhr}$
FROM (24)  ◄ - - - - - - $lv$
◄ - - - - - - $h$
◄ - - - - - - $m$

COMPUTE INNER & OUTER
STEERING ANGLES $\delta_{inner}$, $\delta_{outer}$,
FROM (14) ~ 4

COMPUTE TIRE SIDESLIP
ANGLES $\alpha_{vl}$, $\alpha_{vr}$, $\alpha_{hl}$, $\alpha_{hr}$
FROM (15a) and (15b) ~ 5

INTEGRATE (25) TO CALCULATE
THE STATE AND COMPUTE (26)
TO OBTAIN OUTPUTS FOR EACH
MODEL ~ 6

CALCULATE IDENTIFICATION
MISMATCH FOR EACH MODEL
FROM (2) ~ 7

CALCULATE CUMULATIVE
IDENTIFICATION MISMATCH
ERROR USING (3) ~ 8

CHOSE THE MODEL WITH THE
LEAST CUMILATIVE ERROR
USING (4) AND CALCULATE
TIRE STIFNESSES FROM (27) ~ 9

$C_{vl}(t)$, $C_{vr}(t)$, $C_{hl}(t)$, $C_{hr}(t)$

Fig. 9

Fig 10

Fig 11

Fig 12

Fig 13

measured outputs

measured inputs

$\delta, v_x$

$a_y, \Psi$

Model-1 → $e_1$

Model-2 → $e_2$

Model-3 → $e_3$

Model-N → $e_N$

Fig. 14

Fig 15

## REFERENCES CITED IN THE DESCRIPTION

**Patent documents cited in the description**

- US 6300867 B
- US 7024318 B
- US 7227458 B
- US 6278361 B
- US 6759952 B
- US 7180490 B
- US 6684691 B
- US 20070061100 A
- WO 2007098891 A